## Europäisches Patentamt
## European Patent Office
## Office européen des brevets

(19)

(11) Veröffentlichungsnummer: **0 196 438**
**B1**

(12) **EUROPÄISCHE PATENTSCHRIFT**

(45) Veröffentlichungstag der Patentschrift: **12.09.90**

(21) Anmeldenummer: **86102123.6**

(22) Anmeldetag: **19.02.86**

(51) Int. Cl.⁵: **F 01 L 9/02,** F 01 L 13/00,
F 01 L 1/24, F 16 K 11/07

(54) Ventilsteuervorrichtung für eine Hubkolben-Brennkraftmaschine.

(30) Priorität: **30.03.85 DE 3511820**

(43) Veröffentlichungstag der Anmeldung:
**08.10.86 Patentblatt 86/41**

(45) Bekanntmachung des Hinweises auf die
Patenterteilung:
**12.09.90 Patentblatt 90/37**

(84) Benannte Vertragsstaaten:
**DE FR GB**

(56) Entgegenhaltungen:
**DE-A-2 907 033**
**DE-A-2 926 327**
**DE-A-3 135 650**
**US-A-4 111 165**

(73) Patentinhaber: **ROBERT BOSCH GMBH**
**Postfach 50**
**D-7000 Stuttgart 1 (DE)**

(72) Erfinder: **Rembold, Helmut, Dipl.-Ing.**
**Öhringerstrasse 27**
**D-7000 Stuttgart 40 (DE)**
Erfinder: **Ruoff, Manfred**
**Hohenstaufenstrasse 19**
**D-7141 Möglingen (DE)**
Erfinder: **Walter, Teegen**
**Im Raisger 4**
**D-7050 Waiblingen 7 (DE)**

EP 0 196 438 B1

Courier Press, Leamington Spa, England.

## Beschreibung

### Stand der Technik

Die Erfindung geht aus von einer Ventilsteuervorrichtung für eine Hubkolben-Brennkraftmaschine der im Oberbegriff des Anspruchs 1 angegebenen Gattung.

Bei einer bekannten Vorrichtung dieser Art (DE-OS 31 35 650) weist das Sperrventil einen Ventilschieber auf, dessen Stirnseite von dem Druck in dem Druckmittelraum beaufschlagt wird. Der Ventilschieber besitzt eine Klemmfahne, die zwischen einem Amboß und einem Klemmstempel hindurchgeführt ist. Der Klemmstempel trägt am Ende eine Säule aus übereinandergeschichteten Piezoscheiben, an die eine Steuerspannung angelegt werden kann. Liegt keine Steuerspannung an, so drückt der Klemmstempel die Klemmfahne des Ventilschiebers gegen den Amboß und klemmt diese in der Schließstellung des Ventilschiebers fest. Wird an die Säule eine Steuerspannung gelegt, so zieht sich diese zusammen und gibt die Klemmfahne frei. Unter dem Druck im Druckmittelraum öffnet der Ventilschieber und gibt die Entlastungsleitung zum Druckmittelrücklauf frei. Der Nachteil eines solchen piezoelektrischen Steuerglieds liegt in der relativ hohen Steuerspannung von etwa 700 V.

### Vorteile der Erfindung

Die erfindungsgemäße Ventilsteuervorrichtung für eine Hubkolben-Brennkraftmaschine mit den kennzeichnenden Merkmalen des Anspruchs 1 hat den Vorteil, unmittelbar mit der im Kraftfahrzeug üblichen Bordspannung von 12 V betrieben werden zu können. Zur Verringerung der Steuerleistung arbeitet das erfindungsgemäße 2/2-Wegeventil mit Kompressionsdruckunterstützung aus dem Druckmittelraum und weist geringe Strömungsquerschnitte auf. Die daraus resultierende erforderliche geringe elektromagnetische Betätigungskraft ermöglicht eine kleine und kurzhubige Ausbildung des Elektromagneten. Damit ist die Induktivität relativ niedrig und es ergeben sich extrem kurze Schaltzeiten.

Durch die in den weiteren Ansprüchen aufgeführten Maßnahmen sind vorteilhafte Weiterbildungen und Verbesserungen der im Anspruch 1 angegebenen Ventilsteuervorrichtung möglich.

### Zeichnung

Die Erfindung ist anhand von in der Zeichnung dargestellten Ausführungsbeispielen in der nachfolgenden Beschreibung näher erläutert. Es zeigen:

Fig. 1 einen Längsschnitt einer im Zylinderkopf einer Brennkraftmaschine angeordneten Ventilsteuervorrichtung,

Fig. 2 ausschnittweise einen Längsschnitt eines 2/2-Wegeventils der Ventilsteuervorrichtung in Fig. 1 gemäß einem weiteren Ausführungsbeispiel,

Fig. 3 einen Längsschnitt eines elektromagnetischen Steuerventils im 2/2-Wegeventil der Ventilsteuervorrichtung in Fig. 1 gemäß einem weiteren Ausführungsbeispiel,

Fig. 4 einen Längsschnitt eines 2/2-Wegeventils gemäß einem weiteren Ausführungsbeispiel,

Fig. 5 einen Schaltplan des hydraulischen Anschlusses des 2/2-Wegeventils in Fig. 4 innerhalb der Ventilsteuervorrichtung,

Fig. 6 bis 8 jeweils einen Längsschnitt eines 2/2-Wegeventils in der Ventilsteuervorrichtung nach Fig. 1 gemäß dreier weiterer Ausführungsbeispiele,

Fig. 9 einen den hydraulischen Anschluß des 2/2-Wegeventils gemäß Fig. 8 in der Ventilsteuervorrichtung nach Fig. 1 zeigenden Schaltplan.

### Beschreibung der Ausführungsbeispiele

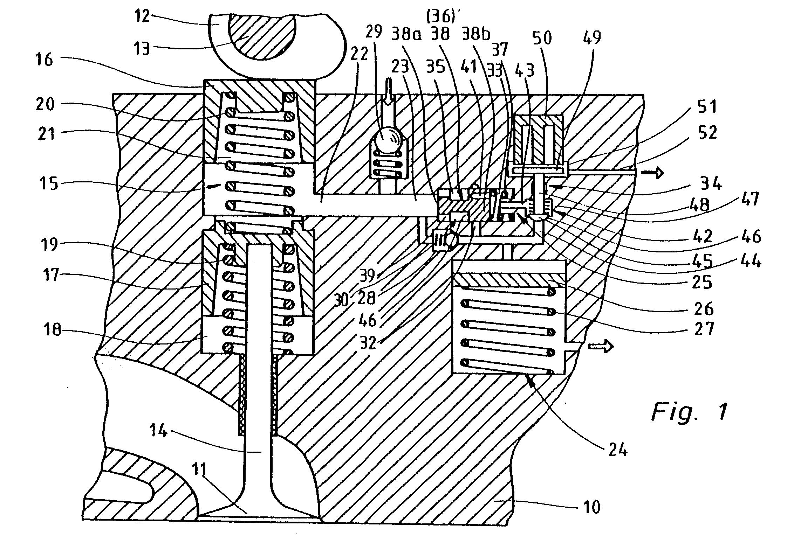

In Fig. 1 ist im Längsschnitt ein Zylinderkopf 10 und ein Einlaßventil 11 einer Hubkolben-Brennkraftmaschine zu sehen. Das Einlaßventil 11 wird von einem Antriebsnocken 12 gesteuert, der auf einer Nockenwelle 13 der Brennkraftmaschine sitzt. Zwischen Antriebsnocken 12 und Ventilstößel 14 des Einlaßventils 11 ist eine mechanischhydraulische Bewegungsübertragungsbaugruppe 15 der Ventilsteuervorrichtung eingeschaltet. Diese schematisch dargestellte Baugruppe 15 weist einen oberen Kolben 16 und einen unteren Kolben 17 auf, die in einer gemeinsamen, zum Ventilstößel 14 koaxialen Gehäusekammer 18 axial verschieblich geführt sind. Der untere Kolben 17 ist von einer Feder 19 belastet, die sich am Boden der Gehäusekammer 18 abstützt. Der obere Kolben 16 wird durch eine am unteren Kolben 17 sich abstützende Feder 20 an den Antriebsnocken 12 der Nockenwelle 13 angelegt. Der obere und untere Kolben 16, 17 begrenzen einen Druckraum 21, der über eine vom Druckraum 21 abgehende Bohrung 22 sowohl mit einer Flüssigkeit füllbar als auch entlastbar ist. Ein Bohrungsabschnitt dient dabei als Entlastungsleitung 23, die zu einem Federspeicher 24 führt und in welcher ein als elektromagnetisch gesteuertes 2/2-Wegeventil 25 ausgebildetes Sperrventil eingeschaltet ist. Bei gesperrtem 2/2-Wegeventil 25 stellt der flüssigkeitsgefüllte Druckraum 21 ein hydraulisches Polster zwischen dem oberen Kolben 16 und dem unteren Kolben 17 dar, so daß die von dem Antriebsnocken 12 ausgelöste Hubbewegung des oberen Kolbens 16 unmittelbar auf den unteren Kolben 17 und von diesem auf den Ventilstößel 14 übertragen wird. Bei geöffnetem 2/2-Wegeventil 25 wird die Flüssigkeit aus dem Druckraum 21 entweder durch die Abwärtsbewegung des oberen Kolbens 16 oder durch die von der Feder 19 veranlaßte Aufwärtsbewegung des unteren Kolbens 17 in den Federspeicher 24 ausgeschoben, wobei im Federspeicher 24 ein Druckkolben 26 entgegen der Kraft einer Federrückstellfeder 27 gespannt wird. Bei geöffnetem 2/2-Wegeventil 25 ist somit der Ventilstößel 14 von der Antriebsbewegung des Antriebsnockens 12 abgekoppelt, und das Einlaßventil 11 schließt ungeachtet der momentanen Stellung des Antriebsnockens 12. Hat sich der obere Kolben 16 wieder in seine in Fig. 1 dargestellte obere Grundstellung zurückbewegt, so strömt nunmehr wieder die Flüssigkeit aus dem Federspeicher 24 über das geöffnete 2/2-Wegeventil 25 in den Druckraum 21. Damit während der Füllung des Druckraums 21 das 2/2-Wegeventil 25 nicht geöffnet gehalten werden muß, ist ein Rückschlagventil 28 vorgesehen, das das 2/2-Wegeventil 25 überbrückt, also mit dem Ventileinlaß und dem Ventilauslaß unmittelbar verbunden ist. Das Rückschlagventil 28 ist so angeordnet, daß seine Sperrichtung vom Druckraum 21 zum Federspeicher 24 hin gerichtet ist. Leckverluste in dem abgeschlossenen und wechselweise zwischen dem Druckraum 21 und dem Federspeicher 24 hin- und hergeschobenen Flüssigkeitsvolumen werden von der Motordruckölversorgung über ein weiteres Rückschlagventil 29 ersetzt, dessen Durchlaßrichtung zu der Bohrung 22 hin gerichtet ist. Die Verbindungen zu dem nicht dargestellten Vorratsspeicher sind in Fig. 1 durch Strömungspfeile symbolisiert.

Das in Fig. 1 im Schnitt zu sehende elektromagnetisch gesteuerte 2/2-Wegeventil 25 weist ein hydraulisch betätigtes Längsschieberventil 30 und ein mit dessen Steuerraum 33 verbundenes elektromagnetisches Steuerventil 34 auf. Das Längsschieberventil 30 weist eine zu dem Ventileinlaß 31 konzentrische Gehäusebohrung 35 auf, in welcher ein Steuerkolben 36 entgegen der Kraft einer im Steuerraum 33 angeordneten Ventilschließfeder 37 axial verschieblich geführt ist. Der Steuerkolben 36 ist als Tandemkolben 38 ausgebildet, dessen vorderer, dem Ventileinlaß 31 zugekehrter Kolbenteil 38a mit axialen Durchgangsbohrungen 39 versehen ist und dessen hinterer Kolbenteil 38b eine Steuerkante 40 trägt, die mit dem radial zur Gehäusebohrung 35 abgehenden, Ventilauslaß 32 zusammenwirkt. Im hinteren Kolbenteil 38b des Tandemkolbens 38 ist eine Drossel 41 angeordnet. Die Drossel 41 verbindet den Steuerraum 33 über die axialen Durchgangsbohrungen 39 mit dem Ventileinlaß 31.

Das elektromagnetische Steuerventil 34 ist als Sitzventil 42 ausgebildet, dessen Ventileinlaß 43 mit dem Steuerraum 33 des Längsschieberventils 30 und dessen Ventilauslaß 44 mit dem Ventilauslaß 32 des Längsschieberventils 30, also auf der Ausgangsseite des Längsschieberventils 30 mit der Entlastungsleitung 23 verbunden ist. Das Sitzventil 42 weist ein Ventilglied 45 auf, das auf einem den Ventilauslaß 44 koaxial umgebenden Ventilsitz 46 durch eine Schließfeder 47 gehalten wird. Das Ventilglied 45 ist über eine Betätigungsstange 48 mit dem Anker 49 eines Elektromagneten 50 gekoppelt. Bei Magneterregung öffnet das Sitzventil 42.

Die Wirkungsweise des beschriebenen 2/2-Wegeventils 25 ist wie folgt:

Bei geschlossenem Sitzventil 42 ist der Steuerraum 33 über die axialen Durchgangsbohrungen 39 und die Drossel 41 mit dem Druckraum 21 verbunden. Die Ventilschließfeder 37 im Steuerraum 33 hält den Tandemkolben 38 in seiner Schließstellung, Wird der Elektromagnet 50 erregt, so zieht der Anker 49 an und das Ventilglied 45 wird vom Ventilsitz 46 abgehoben. Das Sitzventil 42 ist geöffnet. Der Druck im Steuerraum 33 des Längsschieberventils 30 wird schlagartig abgebaut. Da der Strömungsquerschnitt des Sitzventils 42 erheblich größer ist als der Querschnitt der Drossel 41 fällt am Steuer- oder Tandemkolben 38 der gesamte Druck zwischen Druckraum 21 und Federspeicher 24 ab. Die resultierende Druckkraft bewegt den Tandemkolben 38 sehr schnell nach rechts. Die Steuerkante 40 gibt den Ventilauslaß 32 hin zum Federspeicher 24 frei. Bei Druckgleichheit zwischen Druckraum 21 und Federspeicher 24 wird der Tandemkolben 38 wieder in Schließstellung gebracht. Soll dies bei geschlossenem Sitzventil 42 erfolgen, so muß die Drossel 41 so dimensioniert sein, daß bei der vorhandenen Federkraft der Ventilschließfeder 37 der Tandemkolben 38 noch vor Beginn des nächsten Arbeitstaktes schließt. Im Sitzventil 42 auftretende Leckverluste in der Führungsbohrung für die Betätigungsstange 48 gelangen in einen den Anker 49 umschließenden Ankerraum 51 und von dort über eine Rücklaufbohrung 52 zu dem Vorratsspeicher zurück.

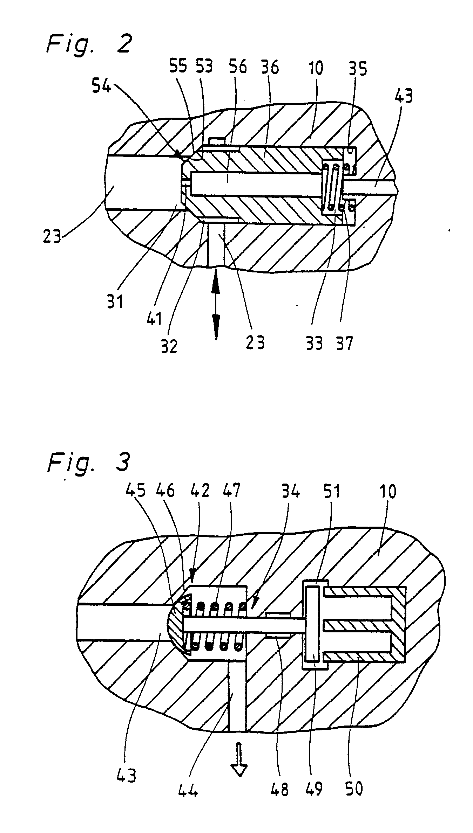

Bei der in Fig. 2 dargestellten Variante des 2/2-Wegeventils 25 ist der in der Gehäusebohrung 35 axial verschiebliche Steuerkolben 36 stirnseitig als Ventilglied 53 eines Sitzventils 54 ausgebildet, das mit einem zum Ventileinlaß 31 konzentrisch angeordnete Ventilsitz 55 zusammenwirkt. Zwischen dem die Ventilschließfeder 37 enthaltenen Steuerraum 33 und dem Ventileinlaß 31 ist wiederum die Drossel 41 vorgesehen, die in einer vom Steuerraum 33 ausgehenden axialen Sackbohrung 56 im Steuerkolben 36 mündet. Im übrigen ist das 2/2-Wegeventil 25 gemäß Fig. 2 identisch ausgebildet zu dem in Fig. 1, so daß gleiche Bauteile mit gleichen Bezugszeichen versehen sind. Insbesondere ist wiederum an dem Steuerraum 33 der Ventileinlaß 43 des Steuerventils 34 angeschlossen, das identisch wie in Fig. 1 ausgebildet ist.

Bei der in Fig. 3 ausschnittweise dargestellten Variante des 2/2-Wegeventils 25 ist gegenüber Fig. 1 oder 2 nur das Steuerventil 34 abgewandelt. Bei dem Steuerventil 34 gemäß Fig. 3 ist der mit dem Ventilglied 45 zusammenwirkende Ventilsitz 46 koaxial an dem mit dem Steuerraum 33 des Längsschieberventils 30 verbundenen Ventileinlaß 43 angeordnet. Der das Ventilglied 45 entgegen der Rückstellkraft der Schließfeder 47 betätigende Elektromagnet 50 ist axial an das Sitzglied 34 angebaut. Der Ventilauslaß 44 ist hier nicht wie in Fig. 1 mit dem Ventilauslaß 32 des Längsschieberventils 30, also mit der Entlastungsleitung 23 verbunden, sondern unmittelbar mit dem drucklosen Vorratsspeicher. Dadurch ist sichergestellt, daß außer der Leckmenge auch die über das Sitzventil 34 ablaufende Flüssigkeitsmenge beim Rückhub aus dem Vorratsspeicher ersetzt werden muß, was aus thermischen Gründen sinnvoll sein kann. Im übrigen ist das Sitzventil 34 wie in Fig. 1 aufgebaut, so daß gleiche Bauteile mit gleichen Bezugszeichen versehen sind.

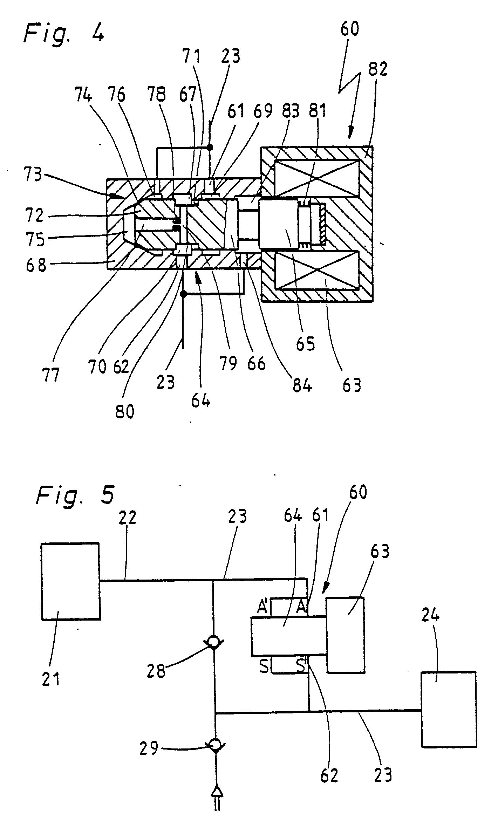

Das in Fig. 4 dargestellte 2/2-Wegeventil 60 kann anstelle des in der Fig. 1 dargestellten 2/2-Wegeventils 25 an gleicher Stelle in die Entlastungsleitung 23 eingeschaltet werden, wobei wiederum der Ventileinlaß 61 mit dem Druckraum 21 und der Ventilauslaß 62 mit dem Federspeicher 24 verbunden ist.

Das 2/2-Wegeventil 60 ist als ein von einem Elektromagneten 63 betätigtes Längsschieberventil 64 ausgebildet, dessen mit dem Anker 65 des Elektromagneten 63 gekoppelter Steuerschieber 66 in einer Gehäusebohrung 67 axial verschiebbar ist. Im Gehäuse 68 sind zwei den Steuerschieber 66 umgebende Ringnuten 69, 70 angeordnet, die jeweils mit dem Ventileinlaß 61 bzw. Ventilauslaß 62 verbunden sind, die jeweils als Radialbohrungen im Gehäuse 68 ausgeführt sind. Der Steuerschieber 66 trägt in bekannter Weise eine ringförmige Steuernut 80, deren eine Nutflanke eine Steuerkante 71 bildet, die mit der mit dem Ventileinlaß 62 verbundenen Ringnut 69 zusammenwirkt.

Der Steuerschieber 66 ist stirnseitig als Ventilglied 72 eines Sitzventils 73 ausgebildet, der mit einem Ventilsitz 74 zusammenwirkt. Der Ventilsitz 74 trennt eine vor der Stirnseite des Steuerschiebers 66 angeordnete Auslaßkammer 75 und eine mit dem Ventileinlaß 61 verbundene Einlaßkammer 76 des Sitzventils 73 Die Auslaßkammer 75 ist durch eine axial mündende Stichbohrung 77, in welcher eine Drossel 78 angeordnet ist und die in einer Querbohrung 79 im Steuerschieber 66 mündet, mit der Ringnut 70 und damit mit dem Ventilauslaß 62 verbunden. Das Ventilglied 72 wird von einer Rückstellfeder 81 bei unerregtem Elektromagneten 63 auf den Ventilsitz 74 aufgepreßt. Die Rückstellfeder 81 stützt sich hierzu an dem Anker 65 des axial angebauten Elektromagneten 63 und an dem Magnetgehäuse 82 ab. Zwischen dem Steuerschieber 66 und dem mit diesem einstückigen Anker 65 ist im Steuerschieber 66 eine ringförmige Außennut 83 eingestochen, die über eine Bohrung 84 im Gehäuse 68 mit dem Ventilauslaß 62 verbunden ist.

Die hydraulische Einschaltung des beschriebenen 2/2-Wegeventils 60 in die Ventilsteuervorrichtung ist in Fig. 5 dargestellt. Der Druckraum 21 ist über die Bohrung 22 und die Entlastungsleitung 23 mit dem Federspeicher 24 verbunden. In die Entlastungsleitung 23 ist das 2/2-Wegeventil 60 eingeschaltet, das von dem Rückschlagventil 28 überbrückt ist. Im Gegensatz zu Fig. 1 ist hier das Rückschlagventil 29 in Reihe zu dem Rückschlagventil 28 geschaltet. Dies hat den Vorteil, daß das Rückschlagventil 29 bei mehreren Ventilen der Hubkolben-Brennkraftmaschine mit jeweils einer Ventilsteuervorrichtung nur einmal vorhanden zu sein braucht.

Die Wirkungsweise des in Fig. 4 beschriebenen elektromagnetisch gesteuerten 2/2-Wegeventils 60 ist wie folgt:

Bei stromlosem Elektromagneten 13 nimmt das 2/2-Wegeventil 60 die in Fig. 4 gezeichnete Stellung ein Sowohl das Längsschieberventil 64 als auch das Sitzventil 73 ist geschlossen. Am Ventileinlaß 61 und damit im Ringraum 69 und in der Einlaßkammer 76 des Sitzventils 73 steht der Druck im Druckraum 21 an. Am Ventilauslaß 62 und damit im Ringraum 70, in der Steuernut 80 und in der Außennut 83 steht Speicherdruck an. Da der Druck in der Außennut 83 und in der Steuernut 80 entgegengerichtet sind, kann keine axiale Kraftkomponente auf den Steuerschieber 66 wirken. Der Querschnitt der Drossel 78 ist so dimensioniert, daß bei geringfügig undichtem Sitzventil 73 kein Druckaufbau in der Steuernut 80 des Steuerschiebers 66 erfolgt.

Wird der Elektromagnet 63 erregt, so bewegt sich der Steuerschieber 66 entgegen der Federkraft der Rückstellfeder 81 in Fig. 4 nach rechts. Das Sitzventil 73 öffnet und die Auslaßkammer 75 wird mit der Einlaßkammer 76 verbunden. Der frei werdende Sitzquerschnitt ist im Vergleich zum Querschnitt der Drossel 78 groß, so daß sich an letzterer die gesamte Druckdifferenz zwischen Stößelraum 21 und Federspeicher 24 abbaut. Die daraus resultierende Axialkraft bewegt zusammen mit der Magnetkraft den Steuerschieber 66 sehr schnell in seine Öffnungsendstellung. Dabei wird der eigentliche Ventildurchlaß von der Ringnut 69 zur Ringnut 70 und damit vom Ventileinlaß 61 zum Ventilauslaß 62 freigegeben.

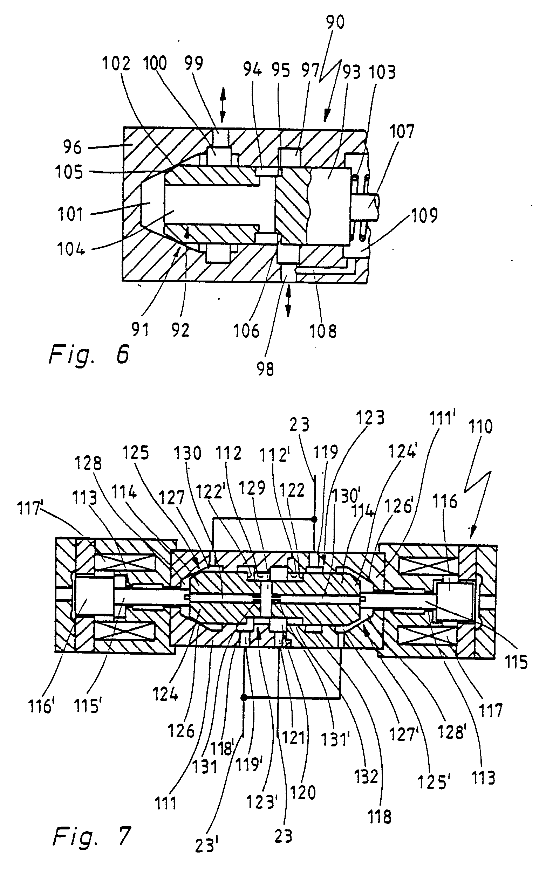

Das in Fig. 6 ausschnittweise dargestellte elektromagnetische 2/2-Wegeventil 90 ist im wesentlichen ein Sitzventil 91, dessen Ventilglied 92 jedoch als Steuerschieber 93 ausgebildet ist, der mit einer Außennut 94 und einer ringförmigen Druckfläche 95 mit einer im Gehäuse 96 des Sitzventils 91 angeordneten, den Steuerschieber 93 koaxial umgebenden Ringnut 97 zusammenwirkt, die mit dem Ventilauslaß 98 verbunden ist. Der Ventileinlaß 99 ist mit einer ebenfalls im Gehäuse 96 den Steuerschieber 93 koaxial umgebenden Ringnut verbunden, welche die Einlaßkammer 100 des Sitzventils 91 bildet. Zwischen Einlaßkammer 100 und einer stirnseitig am Steuerschieber 93 angeordneten Auslaßkammer 101 ist ein Ventilsitz 102 angeordnet, auf welchem der stirnseitig mit einer Kegelfläche 105 versehene Steuerschieber 93 unter der Wirkung einer Ventilschließfeder 103 aufliegt. Die Auslaßkammer 101 ist über eine im Querschnitt sehr große Axialbohrung 104, die mit der Außennut 94 im Steuerschieber 93 in Verbindung steht mit der Ringnut, 97 und damit mit dem Ventilauslaß 98 verbindbar. Die Außennut 94 ist so ausgebildet, daß sie bei geschlossenem Sitzventil 91 eine Spaltöffnung 106 zum Ringraum 97 freigibt und bei geöffnetem Sitzventil 91 die gesamte Breite des Ringraums 97 überdeckt. Der Steuerschieber 93 ist über eine Betätigungsstange 107 mit einem axial angeordneten, hier nicht dargestellten Elektromagneten gekoppelt. Die in Fig. 6 rechte Stirnseite des Steuerschiebers 93 begrenzt einen Druckraum 109, der über eine Bohrung 108 im Gehäuse 96 mit dem Ventilauslaß 98 verbunden ist.

Die Wirkungsweise des beschriebenen 2/2-Wegeventils 90 ist wie folgt:

Bei geschlossenem Sitzventil 91 sind durch die auf dem Ventilsitz 102 aufsitzende Kegelfläche 105 des Steuerschiebers 93, Auslaßkammer 101 und Einlaßkammer 100 voneinander getrennt. In der Einlaßkammer 100 steht der Druck des Druckraums 21 an. Über die von der Außennut 94 in der Schließstellung des Sitzventils 91 freigegebene Spaltöffnung 106 fließt bei leicht undichtem Sitzventil 91 die Leckmenge zum Federspeicher 24 ab, ohne daß am Steuerschieber 93 eine axiale Verstellkraft in Richtung Ventilöffnung aufgebaut werden kann. Sobald der Elektromagnet erregt wird, wird der Steuerschieber 93 in Fig. 6 nach rechts verschoben. Der Öffnungsquerschnitt des Sitzventils nimmt proportional zu, so daß auf die linke Stirnseite des Steuerschiebers 93 etwa die halbe Druckdifferenz zwischen Druck im Druckraum 21 und dem Druck im Federspeicher 24 wirkt. Diese Druckdifferenz unterstützt die Öffnungsbewegung des Steuerschiebers 93.

Das in Fig. 7 im Schnittbild zu sehende elektromagnetische 2/2-Wegeventil 110 ist etwa spiegelsymmetrisch aufgebaut, so daß doppelt vorhandene Bauteile mit gleichen Bezugszeichen versehen sind, von denen die einen zur Unterscheidung einen Beistrich tragen. Das Ventilgehäuse ist zweiteilig ausgebildet, wobei die beiden Gehäuseteile 111 und 111' stirnseitig aneinanderstoßen. Jedes Gehäuseteil 111 bzw. 111' trägt eine von dieser Stirnseite ausgehende Gehäusebohrung 112 bzw. 112', die sich bodenseitig konisch verjüngt und dort über eine im Durchmesser kleinerer Austrittsbohrung 113 bzw. 113' an der anderen Stirnseite mündet. Bei aneinandergesetzten Gehäuseteilen 111, 111' bilden die koaxialen Gehäusebohrungen 112, 112' eine Führungsbohrung für einen Steuerschieber 114, an dessen Stirnseiten jeweils eine durch eine Austrittsbohrung 113 bzw. 113' hindurchgehende Betätigungsstange 115 bzw. 115' angreift, die mit dem Anker 116 bzw. 116' eines Elektromagneten 117 bzw. 117' verbunden ist.

In jedem Gehäuseteil 111 bzw. 111' trägt die Gehäusebohrung 112, 112' eine Ringnut 118, 118', die mit jeweils einem Ventileinlaß 119 bzw. 119' verbunden ist. Außerdem ist in dem einen Gehäuseteil 111 eine weitere Ringnut 120 in der Gehäusebohrung 112 vorgesehen, die mit einem Ventilauslaß 121 verbunden ist. Der Steuerschieber 114 trägt außen am Umfang eine in Axialrichtung des Steuerschiebers 114 sehr breite Steuernut 132, deren beide Nutflanken Steuerkanten 122, 122' darstellen, die mit den Ringnuten 118, 118' der Ventileinlässe 119, 119' zusammenwirken. Der Steuerschieber 114 bildet also mit den beiden Ventileinlässen 119 und 119' und dem einen Ventilauslaß 121 zwei Längsschieberventile 123, 123', an welchen eingangsseitig zwei Druckräume 21 (Fig. 1) von zwei Bewegungsübertragungsbaugruppen 15 und ausgangsseitig ein gemeinsamer Federspeicher 24 angeschlossen werden können.

An jeder Stirnseite trägt der Steuerschieber 114 ein Ventilglied 124 bzw. 124' eines Sitzventils 125 bzw. 125' mit zu der konischen Verjüngung der Gehäusebohrung 112 bzw. 112' korrespondierenden Kegelmantelflächen. Das Ventilglied 124 bzw. 124' arbeitet mit einem Ventilsitz 126 bzw. 126' zusammen, der eine am Steuerschieber 114 außen ringförmig angeordnete Einlaßkammer 127 bzw. 127' und eine am Steuerschieber 114 stirnseitig angeordnete Auslaßkammer 128 bzw. 128' voneinander trennt.

Die Einlaßkammer 127 bzw. 127' ist mit dem Ventileinlaß 119 bzw. 119' verbunden. Der Steuerschieber 114 weist etwa mittig eine Querbohrung 129 auf, in welcher an den Stirnseiten des Steuerschiebers 114 austretende Axialbohrungen 130, 130' münden. In jeder Axialbohrung 130 bzw. 130' ist eine Drossel 131 bzw. 131' angeordnet. Die Querbohrung 129 mündet in die Steuernut 132 und steht damit stets mit der Ringnut, 120 und damit mit dem Ventilauslaß 121 in Verbindung. Die Elektromagnete 117, 117' werden wechselweise erregt und sind als Druckmagnete geschaltet, so daß bei Magneterregung die zugeordneten Längsschieberventile 123, 123' und Sitzventile 125, 125' geschlossen sind.

Die Wirkungsweise des beschriebenen 2/2-Wegeventils 110 ist wie folgt:

Ist der in Fig. 7 rechte Elektromagnet 117 erregt, so befindet sich der Steuerschieber 114 in der in Fig. 7 gezeigten Stellung, in welcher das Längsschieberventil 123 und das Sitzventil 125 geschlossen und das Längsschieberventil 123' und das Sitzventil 125' geöffnet sind. Wird der Elektromagnet 117 stromlos geschaltet und der Elektromagnet 117' erregt, so wird der Steuerschieber 114 in seine andere Endposition bewegt, in welcher nunmehr das Längsschieberventil 123' und das Sitzventil 125' geschlossen und das Längsschieberventil 123 und das Sitzventil 125 geöffnet sind. Bei der Überführung des Steuerschiebers 114 in eine seiner beiden Endstellungen wirkt der am Ventileinlaß 23 bzw. 23' anstehende Druck unterstützend, so daß die Elektromagnete mit relativ geringer elektrischer Leistung auskommen. Im übrigen ist die Funktionsweise der Längsschieberventile 123, 123' und der Sitzventile 125, 125' mit ihren zugeordneten Bauelementen in der Schließ- und in der Öffnungsstellung sowie bei der Überführung von der einen in die andere Stellung identisch wie dies zu dem 2/2-Wegeventil 60 in Fig. 4 beschrieben worden ist, so daß insoweit hierauf Bezug genommen wird.

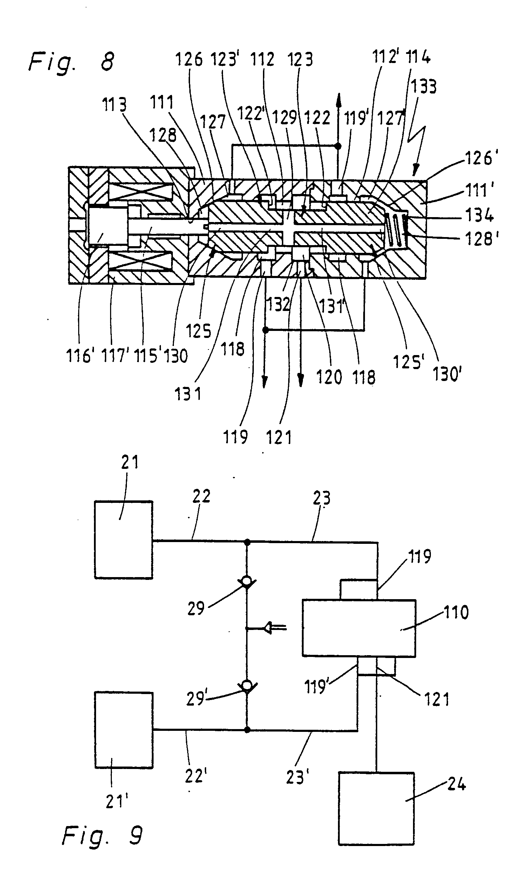

Die hydraulische Einbindung des zu Fig. 7 beschriebenen 2/2-Wegeventils 110 in die Ventilsteuervorrichtung für zwei Ventile einer Hubkolben-Brennkraftmaschine ist in Fig. 9 schaltplanmäßig dargestellt. Ein Druckraum 21 einer Bewegungsübertragungsbaugruppe 15 ist über die als Bohrung ausgeführte Leitung 22 mit der Entlastungsleitung 23 verbunden. Ein Druckraum 21' einer zweiten Bewegungsübertragungsbaugruppe 15' für ein weiteres Ventil der Brennkraftmaschine ist in gleicher Weise über eine Leitung 22' mit der Entlastungsleitung 23' verbunden. Die beiden Entlastungsleitungen 23, 23' sind mit je einem Ventileinlaß 119 bzw. 119' des 2/2-Wegeventils 110 verbunden. Der Ventilauslaß 121 ist mit dem gemeinsamen Federspeicher 24 verbunden. Das üblicherweise das Wegeventil 110 überbrückende Rückschlagventil (in Fig. 1 mit 28 bezeichnet) kann entfallen. Die Leitungen 22 und 22' sind wie in Fig. 1 über Rückschlagventile 29, 29' mit der Motordrucköversorgung verbunden. An das 2/2-Wegeventil 110 werden die Druckräume 21 bzw. 21' von solchen Bewegungsübertragungbaugruppen 15 bzw. 15' angeschlossen, die Einlaßventilen 14 zugeordnet sind, die im Arbeitstakt der Brennkraftmaschine nicht unmittelbar aufeinanderfolgen.

Das in Fig. 8 im Schnitt dargestllte 2/2-Wegeventil 133 unterscheidet sich von dem in Fig. 7 dargestellten und beschriebenen 2/2-Wegeventil 110 nur dadurch, daß der Elektromagnet 117 durch eine an gleicher Stelle, nämlich an der Stirnseite des Steuerschiebers 114 angreifende Druckfeder 134 ersetzt ist. Aufbau und Wirkungsweise des 2/2-Wegeventils 133 stimmen im übrigen identisch mit Aufbau und Wirkungsweise des 2/2-Wegeventils 110 in Fig. 7 überein, so daß gleiche Bauteile mit gleichen Bezugszeichen versehen sind.

Der Vorteil dieser beiden Doppelventilausführungen liegt in dem geringen Bauvolumen. Das 2/2-Wegeventil 110 in Fig. 7 hat zudem noch den Vorteil der geringen Ansprechzeit, da mit dem Einschalten des einen Elektromagneten 115 bzw. 115' der andere abgeschaltet wird. Dabei ist es möglich, die Energie des Abschaltmagneten 115, 115' zum Feldaufbau des Einschaltmagneten 115', 115 mit zu verwenden. Die Steuernut 132 ist so ausgeführt, daß die Steuerkanten 122, 122' eine negative Überdeckung aufweisen, so daß bei Stromausfall der Steuerschieber 114 eine Mittelstellung einnimmt, in der beide Längsschieberventile 123, 123' teilweise geöffnet sind und die entsprechenden Druckräume 121, 121' mit dem Federspeicher 24 verbunden sind. Ein Öffnen der Einlaßventile 11 der Hubkolben-Brennkraftmaschine ist dann nicht mehr möglich, was aus Sicherheitsgründen angestrebt wird. Die Mittelstellung des Steuerschiebers 114 kann aber auch durch an den Stirnseiten des Steuerschiebers 114 sich abstützende schwach vorgespannte Druckfedern erzwungen werden.

## Patentansprüche

1. Ventilsteuerung für eine Hubkolbenbrennkraftmaschine mit mindestens einer zwischen einem Brennkammerventil (11) der Brennkraftmaschine und einem Brennkammerventilantriebsnocken (16) angeordneten Bewegungsübertragungsbaugruppe, die einen über ein Rückschlagventil (29) mit einem Druckmittel füllbaren und über eine Entlastungsleitung (23, 32) entlastbaren Druckraum (21) aufweist, und mit einem in der Entlastungsleitung angeordneten durch ein elektrisch betätigtes Schaltelement gesteuerten Längsschieberventil (30, 64, 92, 123, 123'), das zur Koppelung bzw. Abkoppelung des Brennkammerventils von der Antriebsbewegungs des Antriebsnockens (12) die Entlastungsleitung sperrt bzw. freigibt, wobei das Längsschieberventil als Ventilschließglied einen in einer Bohrung (35) geführten, von einer Schließkraft (37, 81, 103, 117, 117') in Schließrichtung bringbaren Steuerkolben (36, 66, 93, 114) aufweist, der an seiner Mantelfläche eine Steuerkante ausgebildet hat, über die ein Austritt (32) der Entlastungsleitung (23) aus der Bohrung (35) steuerbar ist, wobei der Steuerkolben eine erste in eine erste Richtung der Steuerkolbenlängserstreckung weisende Stirnfläche und eine zweite in eine zweite Richtung der Steuerkolbenlängserstreckung weisende Stirnfläche aufweist, von denen die eine ständig mit einer ersten Druckquelle (21, 24) verbunden ist und die andere, durch das elektrisch betätigte Schaltelement einer zweiten Druckquelle aussetzbar ist, wobei aus der resultierenden Kraft aus den druckbeaufschlagten Stirnflächen der Steuerkolben (36) in Öffnungsrichtung verstellbar ist, dadurch gekennzeichnet, daß das Schaltelement ein elektromagnetisch betätigtes Ventil (34) ist, über das die andere Stirnseite mit der zweiten Druckquelle zur Einleitung der Öffnungsbewegung des Steuerkolbens verbindbar ist oder von ihr trennbar ist, daß ferner die Entlastungsleitung (23) mit einem vorzugsweise als Federspeicher (24) ausgebildeten Rücklaufspeicher verbunden ist und das Schieberventil (25; 60; 90) mittels eines Rückschlagventils (28) überbrückt ist, dessen Sperrichtung vom Druckraum (21) zum Rücklaufspeicher (24) hin gerichtet ist

2. Vorrichtung nach Anspruch 1, dadurch gekennzeichnet, daß die erste Druckquelle der Druckraum (21) ist, als Schließkraft eine Rückstellfeder (37) am Steuerkolben (36) angreift, der von der ersten Stirnfläche in der Bohrung begrenzte Raum über eine Drossel (41) mit einem von der zweiten Stirnfläche in der Bohrung (35) begrenzten Steuerraum (33) ständig verbunden ist und der Steuerraum, über das elektromagnetisch betätigte Ventil (34) mit der zweiten Druckquelle verbindbar ist, die eine gegenüber dem Druck der Druckquelle geringeres Druckniveau aufweist.

3. Vorrichtung nach Anspruch 2, dadurch gekennzeichnet, daß das Ventil (34) als Sitzventil (42) ausgebildet ist, dessen Ventileinlaß (43) mit dem Steuerraum (33) des Längsschieberventils (30) und dessen Ventilauslaß (44) mit dem Auslaß (32) des Schieberventils (30) verbunden ist.

4. Vorrichtung nach Anspruch 2, dadurch gekennzeichnet, daß das Ventil (34) als Sitzventil (42) ausgebildet ist, dessen Ventileinlaß (43) mit dem Steuerraum (33) des Schieberventils (30) und dessen Ventilauslaß (44) mit einer drucklosen Rücklaufbohrung verbunden ist (Fig. 3).

5. Vorrichtung nach Anspruch 3 oder 4, dadurch gekennzeichnet, daß der mit dem Ventilglied (45) zusammenwirkende Ventilsitz (46) des Sitzventils (42) den Ventilauslaß (44) oder den Ventileinlaß (43) koaxial umgibt (Fig. 1 bzw. 3).

6. Vorrichtung nach einem der Ansprüche 2-5, dadurch gekennzeichnet, daß das Sitzventil (42) ein Ventilglied (45) und einen Elektromagneten (50) aufweist, dessen Anker (49) über eine Betätigungsstange (48) mit dem Ventilglied (45) verbunden ist und daß ein den Anker (49) umgebender Ankerraum (51) mit einer drucklosen Rücklaufbohrung (52) zum Abführen der über die Gleitführung der Betätigungsstange (48) austretenden Leckmenge des Druckmittels versehen ist.

7. Vorrichtung nach einem der Ansprüche 2-6, dadurch gekennzeichnet, daß der Steuerkolben (36) als Tandemkolben (38) ausgebildet ist, daß der vordere, einem mit dem Druckraum verbundenen Ventileinlaß (31) in die Bohrung (35) zugekehrte Kolbenteil (38a) mit axialen Durchgangsöffnungen (39) versehen ist und daß der hintere Kolbenteil (38b) die Steuerkante (40) trägt, die mit dem radial abgehenden Auslaß (32) zusammenwirkt.

8. Vorrichtung nach einem der Ansprüche 2-6, dadurch gekennzeichnet, daß der Steuerkolben (36) stirnseitig als Ventilglied (53) eines Sitzventils (54) ausgebildet ist, das mit einem zum Ventileinlaß (31) konzentrisch angeordneten Ventilsitz (55) zusammenwirkt (Fig. 2).

9. Vorrichtung nach Anspruch 1, dadurch gekennzeichnet, daß die erste Stirnseite des Steuerkolbens vom Druck der ersten Druckquelle ständig beaufschlagt ist und die erste Druckquelle der Federspeicher (24) ist, zu dem der Austritt der Entlastungsleitung (32) führt, daß als Rückstellkraft eine Rückstellfeder (81) am Steuerkolben (66) angreift und der Steuerkolben zugleich Ventilglied des elektromagnetisch betätigten Ventils ist und stirnseitig als Ventilglied (72) eines Sitzventils (73) ausgebildet ist und mit einem Ventilsitz (74) zusammenwirkt, der eine vor der zweiten Stirnseite des Steuerschiebers angeordnete Auslaßkammer (75) und eine mit dem Druckraum (21) als zweite Druckquelle höheren Druckniveaus verbundene Einlaßkammer (76) voneinander trennt und daß die Auslaßkammer (75) unter Zwischenschalten einer Drossel (78) ständig mit dem Austritt (62) der Entlastungsleitung am Längsschieberventil (64) verbunden ist. (Figur 4).

10. Vorrichtung nach Anspruch 9, dadurch gekennzeichnet, daß die Verbindung der Auslaßkammer (75) mit dem Austritt (62) durch eine auf der Stirnseite des Steuerschiebers (66) mündende Axialbohrung (77) und durch mindestens eine mit dieser verbundene Radialbohrung (79) erfolgt, die mit einem den Steuerschieber (66) umgebenden Ringraum (70) in Verbindung steht, der mit dem Ventilauslaß (62) verbunden ist.

11. Vorrichtung nach Anspruch 10, dadurch gekennzeichnet, daß ein zweiter, mit dem Druckraum verbundener Ringraum (69) den Steuerschieber (66) umgibt und daß der Steuerschieber (66) auf seinem Umfang eine ringförmige Steuernut (80) trägt, deren vom Sitzventil (73) abgekehrte Nutflanke die Steuerkante (71) des Längsschieberventils (64) bildet.

12. Vorrichtung nach einem der Ansprüche 9-11, dadurch gekennzeichnet, daß der Steuerschieber (66) von einer in Ventilschließrichtung wirkenden Druckfeder (81) beaufschlagt ist und bei unerregtem Elektromagneten (63) eine Sitzventil (73) und Längsschieberventil (64) absperrende Schließstellung einnimmt.

13. Vorrichtung nach einem der Ansprüche 9-12, dadurch gekennzeichnet, daß der Elektromagnet (63) in Achsrichtung des Steuerschiebers (66) unmittelbar an diesen angebaut ist.

14. Vorrichtung nach Anspruch 1, dadurch gekennzeichnet, daß die erste Stirnseite des Steuerkolben (93) von Druck der ersten Druckquelle ständig beaufschlagt ist und die erste Druckquelle der Federspeicher (24) ist, zu dem der Austritt (98) der Entlastungsleitung führt, daß als Rückstellkraft eine Rückstellfeder (103) am Steuerkolben (93) angreift und der Steuerkolben zugleich Ventilglied des elektromagnetisch betätigten Ventils ist und stirnseitig als Ventilglied (92) eines Sitzventils mit einem Ventilsitz (102) zusammenwirkt, der eine vor der zweiten Stirnseite des Steuerkolbens (93) angeordnete Auslaßkammer (101) und eine den Steuerkolben (93) ringförmig umgebende und mit dem Druckraum (21) als zweite Druckquelle höheren Druckniveaus verbundene Einlaßkammer (100) voneinander trennt, daß die Auslaßkammer (101) mit einer Axialbohrung (104) im Steuerkolben (93) verbunden ist und der Steuerkolben eine ringförmige Außennut (94) trägt, die mit der Axialbohrung (104) und mit dem Auslaß (98) verbunden ist.

15. Vorrichtung nach Anspruch 1, dadurch gekennzeichnet, daß dadurch gekennzeichnet, daß das Schieberventil (110) zwei zwischen jeweils einem von zwei Ventileinlässen (119, 119') und einen Ventilauslaß (121) angeordnete Längsschieberventile (123, 123') mit einem gemeinsamen, von mindestens einem Elektromagneten (117, 117') betätigten Steuerschieber (114) aufweist, der zwei Steuerkanten (122, 122') für jeweils eines der beiden Längsschieberventile (123, 123') trägt, daß der Steuerschieber (114) an jeder Stirnseite als Ventilglied (124, 124') eines Sitzventils (125, 125') ausgebildet ist und mit jeweils einem Ventilsitz (126, 126') zusammenwirkt, der jeweils eine vor der Stirnseite des Steuerschiebers (114) angeordnete Auslaßkammer (128, 128') und eine mit jeweils einem Ventileinlaß (119, 119') verbundene Einlaßkammer (127, 127') voneinander trennt, und daß die Auslaßkammern (128, 128') unter Zwischenschaltung jeweils einer Drossel (131, 131') mit dem Ventilauslaß (121) verbunden sind (Fig. 7 und 8).

16. Vorrichtung nach Anspruch 15, dadurch gekennzeichnet, daß die Verbindungen der Auslaßkammern (128, 128') mit dem Ventilauslaß (121) durch jeweils eine auf der Stirnseite des Steuerschiebers (114) mündende Axialbohrung (130, 130') und durch mindestens eine mit den Axialbohrungen (130, 130') verbundene Radialbohrung (129) erfolgt, die in jeder Verschiebestellung des Steuerschiebers (114) mit einem den Steuerschieber (114) umgebenden Ringraum (120) in Verbindung steht, der mit dem Ventilauslaß (121) verbunden ist.

17. Vorrichtung nach Anspruch 16, dadurch gekennzeichnet, daß jeweils ein weiterer, mit dem Ventileinlaß (119, 119') verbundener Ringraum (118, 118') auf beiden Seiten des ersten Ringraums (120) den Steuerschieber (114) umgibt und daß der Steuerschieber (114) auf seinem Umfang eine ringförmige Steuernut (132) trägt, deren eine Nutflanke mit dem einen weiteren Ringraum (118) und deren andere Nutflanke mit dem anderen weiteren Ringraum (118') zusammenwirkt und jeweils die Steuerkante (122, 122') des zugehörigen Längsschieberventils (123, 123') bildet.

18. Vorrichtung nach einem der Ansprüche 5-17, dadurch gekennzeichnet, daß der Betätigungsmagnet (117') über einen Axialstößel (115') an der einen Stirnseite des Steuerschiebers (114) angreift und daß sich auf der anderen Stirnseite des Steuerschiebers (114) eine Druckfeder (134) abstützt (Fig. 8).

19. Vorrichtung nach einem der Ansprüche 5-17, dadurch gekennzeichnet, daß zwei Betätigungsmagnete (117, 117') vorgesehen sind, die über Axialstößel (115, 115') an jeweils einer Stirnseite des Steuerschiebers (114) angreifen, und daß die Betätigungsmagnete (117, 117') wechselweise erregt werden (Fig. 7).

20. Vorrichtung nach Anspruch 19, dadurch gekennzeichnet, daß die Betätigungsmagnete (117, 117') als Druckmagnete geschaltet sind.

21. Vorrichtung nach Anspruch 19 oder 20, dadurch gekennzeichnet, daß die Steuernut (132) derart bemessen ist, daß die die Steuerkanten (122, 122') bildenden Nutflanken bezüglich der weiteren Ringräume (118, 118') eine negative Überdeckung aufweisen.

**Revendications**

1. Commande de soupape pour un moteur à combustion interne alternatif comprenant au moins un groupe de transmission de mouvement disposé entre une soupape de chambre de combustion (11) du moteur et une came de commande de cette soupape (16), qui présente une chambre de pression (21) pouvant être rempli d'un agent de pression par l'intermédiaire d'une soupape de retenue (29) et pouvant être déchargé par une conduite (23, 32), et comprenant une soupape à coulisse longitudinale (30, 64, 92, 123, 123') disposée dans la conduite de décharge et commandée par un élément de circuit actionné électriquement, qui ferme ou libère la canalisation de décharge pour solidariser ou désolidariser la soupape de chambre de combustion du mouvement de commande de la came (12), la soupape à coulisse longitudinale comprenant, comme élément de fermeture de soupape, un piston de commande (36, 66, 93, 114) guidé dans un alésage (35) et pouvant se déplacer dans le sens de fermeture par une force (37, 81, 103, 117, 117'), piston qui a sur sa surface enveloppe une arête de commande, par laquelle une sortie (32) de la conduite de décharge (23) peut être commandée à partir de l'alésage (35), le piston de commande comprenant une première surface frontale regardant dans une première direction de l'étendue longitudinale du piston, et une deuxième surface frontale regardant dans la deuxième direction de l'étendue longitudinale du piston, parmi celles-ci la première est reliée, de façon permanente, à la première source de pression (21, 24), et l'autre peut être soumise à une deuxième source de pression par l'intervention d'un élément de circuit actionné électriquement, le piston de commande (36) pouvant se déplacer dans le sens d'ouverture par la force résultante à partir des deux surfaces frontales sollicitées par les sources de pression, caractérisé en ce que l'élément de circuit est une soupape (34) à commande électro-magnétique, par laquelle l'autre face frontale peut être mise en communication avec la deuxième source de pression, pour déclencher le mouvement d'ouverture du piston de commande, ou bien isolée d'elle, en ce qu'en outre, la conduite de décharge (23) est reliée à l'accumulateur de retour réalisé de préférence comme ressort accumulateur (24) et la soupape à tiroir (25; 60; 90) est court-circuitée au moyen d'une soupape anti-retour (28), dont le sens de blocage est dirigé de la chambre de pression (21) vers l'accumulateur de retour (24).

2. Dispositif selon la revendication 1, caractérisé en ce que la première source de pression de l'espace de pression est l'espace de pression (21), comme force de fermeture, un ressort de rappel (37) appuie contre le piston de commande (36), l'espace limité dans l'alésage par la première face frontale est relié de façon permanente par un étranglement (41) avec un espace pilote (33) limité dans l'alésage (35) par la deuxième surface frontale et peut être relié à la deuxième source de pression par la soupape (34) actionnée électromagnétiquement, qui présente un niveau de pression plus faible vis à vis de la pression de la source de pression.

3. Dispositif selon la revendication 2, caractérisé en ce que la soupape (34) est réalisée en soupape à siège (42), dont l'entrée de soupape (43) est reliée à l'espace de commande (33) de la soupape à coulisse longitudinale (30) et dont la sortie de soupape (44) est reliée à la sortie (32) de la soupape à coulisse longitudinale (30).

4. Dispositif selon la revendication 2, caractérisé en ce que la soupape (34) est réalisée en soupape à siège (42) dont l'entrée de soupape (43) est reliée à l'espace de commande (33) de la soupape à tiroir (30) et dont la soupape de sortie (44) est reliée à un alésage de retour sans pression (figure 3).

5. Dispositif selon les revendications 3 ou 4, caractérisé en ce que le siège de soupape (46) de la soupape à siège (42) coopérant avec l'élément de soupape (45) entoure co-axialement la sortie de soupape (44) ou l'entrée de soupape (43), (figure 1 ou 3).

6. Dispositif selon une des revendications 2 à 5, caractérisé en ce que la soupape à siège (42) comprend un élément de soupape (45) et un électro-aimant (50), dont l'induit (49) est relié par une tige de commande (48) avec l'élément de soupape (45) et en ce qu'une chambre (51) entourant l'induit (49) est équipé d'un alésage de retour (52) pour renvoyer le débit de fuite de l'agent de pression sortant par la coulisse de la tige de commande (48).

7. Dispositif selon une des revendications 2 à 6, caractérisé en ce que le piston de commande (36) est réalisé comme piston tandem (38), en ce que la partie avant (38a) du piston tournée dans l'alésage (35) vers une entrée de soupape (31) reliée à l'espace de pression est pourvue d'ouvertures axiales de passage (39) et en ce que la partie arrière du piston (38b) porte l'arête pilote (40), qui coopère avec la sortie (32) s'éloignant radialement.

8. Dispositif selon une des revendications 2 à 8, caractérisé en ce que le piston de commande (36) est réalisé du côté frontal, comme élément de soupape (53) d'une soupape à siège (54), qui coopère avec un siège de soupape (55) disposé de façon concentrique par rapport à l'admission de soupape (31) (figure 2).

9. Dispositif selon la revendication 1, caractérisé en ce que la première face frontale du piston de commande est sollicitée en permanence par la pression de la première source de pression et la première source de pression est le réservoir avec ressort (24), auquel conduit la sortie de la canalisation de décharge (32), en ce que, comme force de rappel, un ressort de rappel (81) agit sur le piston de commande (66) et le piston de commande est en même temps élément de soupape de la soupape actionnée électromagnétiquement et côté frontal est réalisé comme élément de soupape (72) d'une soupape à siège (73) et coopère avec un siège de soupape (74), qui sépare l'une de l'autre une chambre de sortie (75) disposée devant le deuxième côté frontal du tiroir de commande et une chambre d'entrée (76) reliée avec la chambre de pression (21) comme deuxième source de pression de niveau de pression plus élevé et en ce que la chambre de sortie (75) est reliée de façon continue à la sortie (62) de la conduite de décharge sur la soupape à coulisse longitudinale (64) par l'intermédiaire d'un étranglement (78) (figure 4).

10. Dispositif selon la revendication à 9, caractérisé en ce que la liaison de la chambre de sortie (75) avec la sortie (62) se fait par un alésage (77) axial débouchant sur la face frontale du tiroir de commande (66) et par au moins un alésage (79) radial communiquant avec celui-ci, qui est en liaison avec une chambre annulaire (70) entourant le tiroir de commande (66), espace qui est en liaison avec la sortie de soupape (62).

11. Dispositif selon la revendication 10, caractérisé en ce qu'une deuxième chambre annulaire (69) reliée à la chambre de pression, entoure le tiroir de commande (66) et en ce que le tiroir de commande (66) porte sur son pourtour une rainure de commande (80) annulaire, dont le flanc de rainure éloigné de la soupape à siège (73) constitue l'arête de commande (71) de la soupape à coulisse longitudinale (64).

12. Dispositif selon une des revendications 9 à 11, caractérisé en ce que le tiroir de commande (66) est sollicité par un ressort de pression (81) agissant dans le sens de fermeture de la soupape et en l'absence d'excitation de l'électro-aimant (63) prend une position de fermeture verrouillant une soupape à siège (73) et une soupape à coulisse longitudinale (64).

13. Dispositif selon une des revendications 9 à 12, caractérisé en ce que l'électro-aimant (63) est monté dans le sens de l'axe du tiroir de commande (66) directement contre celui-ci.

14. Dispositif selon la revendication 1, caractérisé en ce que la première face frontale du piston de commande (93) est sollicitée de façon continue par la pression de la première source de pression et la première source de pression est le ressort accumulateur (24), auquel conduit la sortie (98) de la conduite de décharge, en ce que, comme force de rappel, un ressort de rappel (103) appuie sur le piston de commande (93) et le piston de commande est, en même temps, élément de la soupape actionnée électromagnétiquement et agit du côté frontal comme élément de soupape (92) d'une soupape à siège, de concert avec un siège de soupape (102), qui sépare l'une de l'autre une chambre de sortie (101) placée devant la deuxième face frontale du piston de commande (93) et une chambre d'entrée (100) entourant un anneau le piston de commande (93) et reliée à l'espace de pression (21) comme deuxième source de pression de niveau de pression plus élevé, en ce que la chambre de sortie (101) est reliée à un alésage axial (104) du piston de commande (93) et le piston de commande (93) porte une rainure extérieure (94) annulaire qui est reliée à l'alésage axial (104) et avec la sortie (98).

15. Dispositif selon la revendication 1, caractérisé en ce que la soupape distributeur (110) comprend deux soupapes à coulisse longitudinale (123, 123') placées respectivement entre une des deux entrées de soupape (119, 119') et une sortie de soupape (121), avec un tiroir de commande (114) commun actionné par au moins un électro-aimant (117, 117'), et qui porte respectivement deux arêtes de commande (122, 122'), une pour chacune des deux soupapes à coulisse longitudinale (123, 123'), en ce que le tiroir de commande (114) est réalisé sur chaque côté frontale en élément de soupape (124, 124') d'une soupape à siège (125, 125') et coopère respectivement avec un siège de soupape (126, 126') qui sépare l'une de l'autre respectivement une chambre de sortie (128, 128') placée devant le côté frontal du tiroir de commande (114) et une chambre d'entrée (127, 127') reliée respectivement à une entrée de soupape (119, 119') et en ce que les chambres de sortie (128, 128) sont reliées à la sortie du soupape (121) respectivement par l'intermédiaire d'un étranglement (131, 131') (figures 7 et 8).

16. Dispositif selon la revendication 15, caractérisé en ce que les connexions des chambres de sortie (128, 128') à la soupape de sortie (121) se font chaque fois par un alésage axiale (130, 130') débouchant sur la face frontale du tiroir de commande (114) et chaque fois par un alésage radiale (129) relié aux aléages axiaux (130, 130') qui se trouve en liaison dans chaque position du tiroir de commande (114) à une chambre annulaire (120) entourant le tiroir de commande (114), chambre annulaire reliée à la soupape de sortie (121).

17. Dispositif selon la revendication 16, caractérisé en ce que respectivement, un autre espace annulaire (118, 118') relié à l'entrée de soupape (119, 119') entoure le tiroir de commande (114) des deux côtés de la première chambre annulaire (120) et en ce que le tiroir de commande (114) porte sur son pourtour, une rainure de commande annulaire (132), dont un flanc de rainure agit de concert avec une autre chambre annulaire (118) et dont l'autre flanc de rainure opère de concert avec l'autre espace annulaire (118') et forme respectivement les arêtes de commande (122, 122') de la soupape à coulisse longitudinale correspondante (123, 123').

18. Dispositif selon une des revendications 5 à 17, caractérisé en ce que l'aimant de commande (117') agit par un poussoir axial (115') sur une des faces frontales du tiroir de commande (114) et en ce qu'un ressort de pression (134) s'appuie sur l'autre face frontale du tiroir de commande (114) (figure 8).

19. Dispositif selon une des revendications 5 à 17, caractérisé en ce que deux aimants de commande (117, 117') sont prévus, qui agissent par des poussoirs axiaux (115, 115') respectivement sur une des faces frontales du tiroir de commande (114) et en ce que les aimants de commande (117, 117') sont excités alternativement.

20. Dispositif selon la revendication 19, caractérisé en ce que les aimants de commande (117, 117') sont branchés en aimants de pression.

21. Dispositif selon une des revendications 19 ou 20, caractérisé en ce que la rainure de commande (132) est dimensionnée de façon que les flancs de rainure formant les arêtes de commande (122, 122') présentent un recouvrement négatif par rapport aux autres chambres annulaires (118, 118').

## Claims

1. Valve timing for a reciprocating piston internal combustion engine having, located between a combustion chamber valve (11) of the internal combustion engine and a combustion chamber valve drive cam (16), at least one motion transmission sub-assembly with a pressure space (21) which can be filled with a pressure medium via a non-return valve (29) and can be relieved via a relief line (23, 32), and having, located in the relief line and controlled by an electrically actuated switching element, a longitudinal spool valve (30, 64, 92, 123, 123') which shuts off or frees the relief line in order to couple or decouple the combustion chamber valve from the drive motion of the drive cam (12), the longitudinal spool valve having as valve closing element a control piston (36, 66, 93, 114) which is guided in a bore (35) and can be brought into the closing direction by a closing force (37, 81, 103, 117, 117'), which control piston has, formed on its outer surface, a control edge by means of which an outlet (32) of the relief line (23) from the bore (35) can be controlled, the control piston having a first end face pointing in a first direction of the control piston longitudinal extent and a second end face pointing in a second direction of the control piston longitudinal extension, of which end faces one is continually connected to a first pressure source (21, 24) and the other can be subjected to a second pressure source by means of the electrically actuated switching element, the control piston (36) being adjustable in the opening direction due to the force resulting from the end faces subject to pressure, characterized in that the switching element is an electromagnetically actuated valve (34) by means of which the other end face can be connected to the second pressure source or can be separated from it in order to initiate the opening motion of the control piston, that in addition the relief line (23) is connected to a return reservoir preferably designed as a spring reservoir (24) and the spool valve (25; 60; 90) is bypassed by means of non-return valve (28) whose shut-off direction is from the pressure space (21) towards the return reservoir (24).

2. Device according to Claim 1, characterized in that the first pressure source is the pressure space (21), a return spring (37) acts as closing force on the control piston (36), the space bounded by the first end face in the bore is continuously connected via a throttle (41) to a control space (33) bounded by the second end face in the bore (35) and the control space can be connected to the second pressure source via the electromagnetically actuated valve (34), which second pressure source has a lower pressure level relative to the pressure of the first pressure source.

3. Device according to Claim 2, characterized in that the valve (34) is designed as a seat valve (42) whose valve inlet (43) is connected to the control space (33) of the longitudinal spool valve (30) and whose valve outlet (44) is connected to the outlet (32) of the spool valve (30).

4. Device according to Claim 3, characterized in that the valve (34) is designed as a seat valve (42) whose valve inlet (43) is connected to the control space (33) of the spool valve (30) and whose valve outlet (44) is connected to an unpressurized return hole (Fig. 3).

5. Device according to Claim 3 or 4, characterized in that the valve seat (46), of the seat valve (42), interacting with the valve element (45) coaxially surrounds the valve outlet (44) or the valve inlet (43) (Fig. 1 and 3).

6. Device according to one of the Claims 2-5, characterized in that the seat valve (42) has a valve element (45) and an electromagnet (50) whose armature (49) is connected to the valve element (45) via an actuation rod (48) and that an armature space (51) surrounding the armature (49) is provided with an unpressurized return hole (52) for removing the leakage quantity of pressure medium emerging via the sliding guide of the actuation rod (48).

7. Device according to one of the Claims 2-6, characterized in that the control piston (36) is designed as a tandem piston (38), that the front piston part (38a) facing towards a valve inlet (31), connected to a pressure space, in the hole (35) is provided with axial through openings (39) and that the rear piston part (38b) carries the control edge (40) which interacts with the radial exit outlet (32).

8. Device according to one of the Claims 2-6, characterized in that the control piston (36) is designed on its end face as a valve element (53) of a seat valve (54) which interacts with a valve seat arranged concentrically with the valve inlet (31) (Fig. 2).

9. Device according to Claim 1, characterized in that the first end face of the control piston is continuously subjected to the pressure of the first pressure source and the first pressure source is the spring reservoir (24) to which the outlet of the relief line (23) leads, that a return spring (81) acts on the control piston (66) as return force and the control piston is both valve element of the electromagnetically actuated valve and is designed at its end face as the valve element (72) of a seat valve (73) and interacts with a valve seat (74) which separates from one another an outlet chamber (75) located in front of the second end face of the control spool and an inlet chamber (76) connected to the pressure space (21) as the second pressure source of higher pressure level and that the outlet chamber (75) is continuously connected via a throttle to the outlet (62) of the relief line on the longitudinal spool valve (64) (Fig. 4).

10. Device according to Claim 9, characterized in that the connection between the outlet chamber (75) and the outlet (62) takes place by means of an axial hole (77) emerging on the end face of the control spool (66) and by means of at least one radial hole (79) which is connected to the axial hole (77) and an annular space (70) surrounding the control spool (66) and connected to the valve outlet (62).

11. Device according to Claim 10, characterized in that a second annular space (69) connected to the pressure space surrounds the control spool (66) and that the control spool (66) has, on its periphery, an annular control groove (80) whose groove flank remote from the seat valve (73) forms the control edge (71) of the longitudinal spool valve (64).

12. Device according to one of the Claims 9-11, characterized in that the control spool (66) is acted on by a compression spring (81) operating in the valve closing direction and, when the electromagnet (63) is not excited, a seat valve (63) and longitudinal spool valve 64) take up a shut-off closed position.

13. Device according to one of the Claims 9-12, characterized in that the electromagnet (63) is directly built on to the control spool (66) in the axial direction of the latter.

14. Device according to Claim 1, characterized in that the first end face of the control piston (93) is continually subjected to the pressure of the first pressure source and the first pressure source is the spring reservoir (24) to which the outlet (98) of the relief line leads, that a return spring (103) acts on the control piston (93) as the return force and the control piston is simultaneously valve element of the electromagnetically actuated valve and interacts at its end face, as the valve element (92) of a seat valve, with a valve seat (102) which separates from one another an outlet chamber (101) located in front of the second end face of the control piston (93) and an inlet chamber (100) annularly surrounding the control piston (93) and connected to the pressure space (21) as the second pressure source of higher pressure level, that the outlet chamber (101) is connected to an axial hole (104) in the control piston (93) and the control piston has an annular external groove (94) which is connected to the axial hole (104) and to the outlet (98).

15. Device according to Claim 1, characterized in that the spool valve (110) has two longitudinal spool valves (123, 123') each located between one of two valve inlets (119, 119') and a valve outlet (121), the longitudinal spool valves (123, 123') having a common control spool (114) actuated by at least one electromagnet (117, 117'), which control spool (114) carries two control edges (122, 122') one for each of the two longitudinal spool valves (123, 123'), that the control spool (114) is designed at each end face as the valve element (124, 124') of a seat valve (125, 125') and interacts in each case with a valve seat (126, 126'), each of which separates from one another an outlet chamber (128, 128') located before the end face of the control spool (114) and an inlet chamber (127, 127') connected with a respective valve inlet (119, 119'), and that the outlet chambers (128, 128') are connected to the valve outlet (121) via, in each case, a throttle (131, 131') (Fig. 7 and 8).

16. Device according to Claim 14, characterized in that the connections between the outlet chambers (128, 128') and the valve outlet (121) take place in each case by means of an axial hole (130, 130') emerging on the end face of the control spool (114) and by means of at least one radial hole (129) connected to the axial holes (130, 130'), which radial hole (129) is connected in each displacement position of the control spool (114) to an annular space (120) surrounding the control spool (114) and connected to the valve outlet (121).

17. Device according to Claim 16, characterized in that a further annular space (118, 118') connected to the valve inlet (119, 119') surrounds the control spool (114) on each of the two sides of the first annular space (120) and that the control spool (114) has, on its periphery, an annular control groove (132) one groove flank of which interacts with one further annular space (118) and the other groove flank of which interacts with the other further annular space (118') and forms, in each case, a control edge (122, 122') of the associated longitudinal spool valve (123, 123').

18. Device according to one of the Claims 5-17, characterized in that the actuation magnet (117') acts via an axial push rod (115') on one end face of the control spool (114) and that a compression spring (134) is supported on the other end face of the control spool (114) (Fig. 8).

19. Device according to one of the Claims 5-17, characterized in that two actuation magnets (117, 117') are provided, each of which acts via an axial push rod (115, 115') on one end face of the control spool (114), and that the actuation magnets (117, 117') are excited alternately (Fig. 7).

20. Device according to Claim 19, characterized in that the actuation magnets (117, 117')' are connected as pressure magnets.

21. Device according to Claim 19 or 20, characterized in that the control groove (132) is dimensioned in such a way that the groove flanks forming the control edges (122, 122') have negative overlap with respect to the further annular spaces (118, 118').

Fig. 1

EP 0 196 438 B1

Fig. 2

Fig. 3

*Fig. 4*

*Fig. 5*

Fig. 6

Fig. 7

4

EP 0 196 438 B1

Fig. 8

Fig. 9